# EUROPÄISCHE PATENTSCHRIFT

(11) **EP 0 918 679 B1**
(45) Veröffentlichungstag und Bekanntmachung des Hinweises auf die Patenterteilung: **15.03.2000**
(21) Anmeldenummer: 97938924.4
(22) Anmeldetag: 18.08.1997
(51) Int. Cl.: B62D 6/00, B62D 101/00

(54) **STEUERGERÄT FÜR EINE HILFSKRAFTLENKUNG FÜR KRAFTFAHRZEUGE**
CONTROLLER FOR A MOTOR VEHICLE SERVO-ASSISTED STEERING SYSTEM
DISPOSITIF DE COMMANDE D'UNE DIRECTION ASSISTEE POUR VEHICULES AUTOMOBILES

(30) Priorität: 21.08.1996 DE 19633632
(43) Veröffentlichungstag der Anmeldung: 02.06.1999
(73) Patentinhaber: ZF FRIEDRICHSHAFEN Aktiengesellschaft, 88038 Friedrichshafen (DE)
(72) Erfinder: LANG, Armin, D-73529 Schwäbisch Gmünd (DE); SCHÜLE, Jürgen, D-73525 Schwäbisch Gmünd (DE); CERNY, Walter, D-73527 Schwäbisch Gmünd (DE)
(86) Internationale Anmeldenummer: EP9704504
(87) Internationale Veröffentlichungsnummer: WO9807612

(56) Entgegenhaltungen:
- EP-A- 0 141 626

## Beschreibung

Die Erfindung betrifft ein Steuergerät für eine Hilfskraftlenkung für Kraftfahrzeuge nach dem Oberbegriff des Anspruches 1. Bei dieser Hilfskraftlenkung ist ein Stellglied zur Veränderung der Lenkcharakteristik in Abhängigkeit von der Fahrgeschwindigkeit des Kraftfahrzeugs ansteuerbar.

Ein derartiges Steuergerät ist bekannt aus der EP-B1 141 626. Bei diesem Steuergerät wird zur Veränderung der Lenkcharakteristik einer Magnetspule eines Proportionalventils ein bestimmter elektrischer Speisestrom zugeführt, der abhängig von der Fahrgeschwindigkeit geregelt wird. Um die Verlustleistung in dem Steuergerät möglichst klein zu halten, bedient man sich der Pulsweitenmodulation, die von einem Generator getaktet wird. Die dabei erzeugten Spannungspulse können gleichzeitig durch ihre Schüttelwirkung die magnetischen und mechanischen Reibungsverluste im Magnetkreis minimieren, wenn die Taktfrequenz entprechend niedrig gewählt ist. Dies bedeutet, daß die Reibungsverluste in dem Magnetkreis dann sehr niedrig sind, wenn die Taktfrequenz möglichst niedrig ist. Um die dabei entstehenden Geräusche möglichst klein zu halten, sollte die Taktfrequenz jedoch möglichst hoch sein. Die gewählte Frequenz muß deshalb immer einen Kompromiß darstellen und kann keine optimale Lösung für eine Forderung nach geringer Reibung und geringen Geräuschen bieten. Außerdem treten in dem Regelkreis von der Erfassung der Fahrgeschwindigkeit bis zur Reaktion, die der Fahrer am Lenkhandrad wahrnimmt, Verzögerungen auf, die ein unharmonisches Fahrgefühl vermitteln.

Der Erfindung liegt die Aufgabe zugrunde, ein Steuergerät für eine Hilfskraftlenkung zu schaffen, das die oben genannten Nachteile vermeidet. Außerdem soll dem Fahrer ein sicheres Lenken seines Fahrzeuges mit einem harmonischen Lenkgefühl auch beim Beschleunigen und Abbremsen des Fahrzeuges ermöglicht werden.

Diese Aufgabe wird durch das im Anspruch 1 gekennzeichnete Steuergerät gelöst. Die Lösung erfolgt dadurch, daß im Gegensatz zu dem bekannten Steuergerät nicht nur die Fahrgeschwindigkeit, sondern auch die zeitliche Änderung der Fahrgeschwindigkeit bei der Ansteuerung des Stellgliedes berücksichtigt wird.

Zweckmäßige und vorteilhafte Ausgestaltungen der Erfindung sind in den Unteransprüchen angegeben. Signale, die aus der Fahrgeschwindigkeit und aus der zeitlichen Änderung der Fahrgeschwindigkeit, d. h. aus der Beschleunigung bzw. Verzögerung des Fahrzeuges, entstehen, werden in einer Einrichtung zur Signalverarbeitung bewertet. Aus dieser Einrichtung zur Signalverarbeitung wird ein gemeinsames Signal zur Ansteuerung des Stellgliedes weitergeleitet. Bei einem Beschleunigungsvorgang entsteht ein Signal, das einer höheren Fahrgeschwindigkeit entspricht, während bei einem Verzögerungsvorgang ein Signal entsteht, das einer niedrigeren Fahrgeschwindigkeit entspricht. Dadurch wird, z. B. beim Durchfahren einer engeren Kurve, vermieden, daß erst beim Durchfahren der Kurve der Fahrer durch ein evtl. plötzlich auftretendes Ändern der Lenkcharakteristik überrascht wird.

In dem Steuergerät ist parallel zu einem Glied für die Erfassung der Fahrgeschwindigkeit ein Differenzierglied angeordnet. Beide Elemente liefern ihre Signale an die Einrichtung zur Signalverarbeitung weiter. Für die Signalverarbeitung gibt es unterschiedliche Möglichkeiten. So kann die Einrichtung zur Signalverarbeitung beispielsweise ein Kennfeld mit verschiedenen Kennlinien enthalten. In dem Kennfeld können mehrere Kennlinientabellen und Beschleunigungstabellen abgelegt sein. Alternativ dazu kann die Einrichtung zur Signalverarbeitung die Signale des Differenziergliedes mathematisch oder analog verarbeiten.

Das Stellglied kann beispielsweise mechanisch oder elektro-mechanisch arbeiten. Vorteilhaft ist es jedoch, wenn das Stellglied eine Magnetspule eines elektromagnetisch betätigbaren Proportionalventils ist und wenn der dem Proportionalventil zugeführte Speisestrom von einem Leistungstransistor in Abhängigkeit von der Fahrgeschwindigkeit des Fahrzeugs und von der zeitlichen Änderung der Fahrgeschwindigkeit geregelt wird.

Im folgenden wird die Erfindung anhand zweier in der Zeichnung dargestellter Ausführungsbeispiele näher erläutert. Es zeigen:
- Fig. 1: den Grundaufbau des erfindungsgemäßen Steuergerätes in schematischer Darstellung und
- Fig. 2: eine Ausführungsform des Steuergerätes der Fig. 1.

Einem Steuergerät 1 werden Signale von einem Geschwindigkeitssensor 2 zugeführt. Diese Signale werden in dem Steuergerät 1 einem Glied 3 zur Erfassung der Fahrgeschwindigkeit zugeführt. Das Signal wird von diesem Glied einerseits zu einer Einrichtung 4 zur Signalverarbeitung und andererseits zu einem Differenzierglied 5 weitergeleitet. Von dem Differenzierglied 5 wird ein Signal für die zeitliche Änderung der Fahrgeschwindigkeit ebenfalls an die Einrichtung 4 zur Signalverarbeitung weitergeleitet. In der Einrichtung 4 zur Signalverarbeitung wird sowohl das für die Fahrgeschwindigkeit maßgebliche Signal als auch das für die zeitliche Änderung der Fahrgeschwindigkeit maßgebliche Signal bewertet. In der Einrichtung 4 zur Signalverarbeitung entsteht ein Signal zur Ansteuerung eines Stellgliedes 6.

Dabei ist die Einrichtung 4 zur Signalverarbeitung derart ausgebildet, daß bei einem Beschleunigungsvorgang ein Signal entsteht, das einer höheren Fahrgeschwindigkeit als der tatsächlichen entspricht und bei einem Verzögerungsvorgang ein Signal, das einer niedrigeren Fahrgeschwindigkeit als der tatsächlichen entspricht.

In der Einrichtung 4 zur Signalverarbeitung kann ein Kennfeld mit wenigstens einer Kennlinientabelle und wenigstens einer Beschleunigungstabelle enthalten sein. Eine andere Möglichkeit zur Signalverarbeitung kann darin bestehen, daß die Einrichtung 4 zur Signalverarbeitung die Signale des Differenziergliedes 5 mathematisch oder analog verarbeitet.

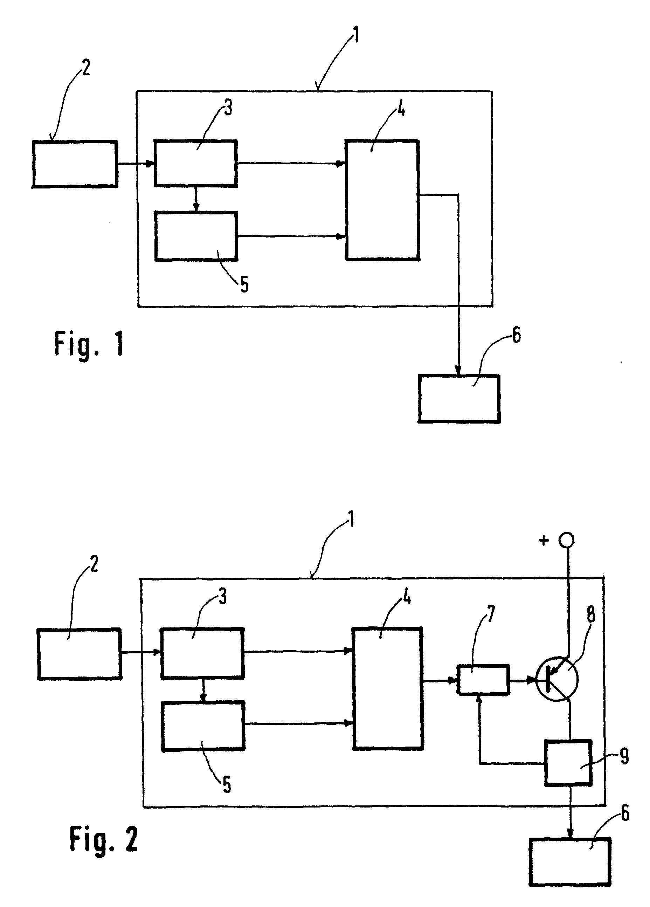

Das Ausführungbeispiel der Fig. 2 unterscheidet sich von dem in Fig. 1 dargestellten Ausführungsbeispiel dadurch, daß der Einrichtung 4 zur Signalverarbeitung eine Endstufe mit einem Soll-Ist-Vergleich nachgeschaltet ist, die einen Pulsweitenmodulator 7, einen Leistungstransistor 8 und einen Stromsensor 9 enthält.

Das Stellglied 6 wird zweckmäßigerweise als Magnetspule eines elektromagnetisch betätigbaren Proportionalventils ausgebildet. Der dem Proportionalventil zugeführte Speisestrom wird von dem Leistungstransistor 8 in Abhängigkeit von der Fahrgeschwindigkeit des Kraftfahrzeugs und von der zeitlichen Änderung der Fahrgeschwindigkeit geregelt.

Wenn das Fahrzeug mit einer bestimmten Geschwindigkeit fährt, so wird diese Geschwindigkeit erfaßt und bewertet und abhängig von der Fahrkennlinie über den Pulsweitenmodulator 7 die Magnetspule des Stellgliedes 6 entsprechend bestromt. Wird das Fahrzeug beschleunigt oder verzögert, so wird zusätzlich die zeitliche Änderung der Geschwindigkeit erfaßt und bewertet. Die Adresse der Kennlinientabelle der Einrichtung 4 zur Signalverarbeitung wird so verstellt, daß gleichsam eine Übersteuerung der Magnetspule bewirkt wird. Mit Hilfe der Beschleunigungstabelle kann diese Übersteuerung sowohl dem Fahrzeug als auch dem Lenksystem angepaßt werden. Auf diese Weise können Regelverzögerungen im System und Hysterese an der Magnetspule weitgehend ausgeglichen werden.

### Bezugszeichen

- 1: Steuergerät
- 2: Geschwindigkeitssensor
- 3: Glied zur Erfassung der Fahrgeschwindigkeit
- 4: Einrichtung zur Signalverarbeitung
- 5: Differenzierglied
- 6: Stellglied
- 7: Pulsweitenmodulator
- 8: Leistungstransistor
- 9: Stromsensor

## Patentansprüche

1. Steuergerät für eine Hilfskraftlenkung für Kraftfahrzeuge, mit einem in Abhängigkeit von der Fahrgeschwindigkeit des Kraftfahrzeugs ansteuerbaren Stellglied (6) zur Veränderung der Lenkcharakteristik, dadurch **gekennzeichnet**, daß zusätzlich zur Fahrgeschwindigkeit die zeitliche Änderung der Fahrgeschwindigkeit bei der Ansteuerung des Stellgliedes (6) berücksichtigt wird.

2. Steuergerät nach Anspruch 1, dadurch **gekennzeichnet**, daß in einer Einrichtung (4) zur Signalverarbeitung die Fahrgeschwindigkeit und die zeitliche Änderung der Fahrgeschwindigkeit bewertet werden, woraus ein Signal zur Ansteuerung des Stellgliedes (6) entsteht.

3. Steuergerät nach Anspruch 2, dadurch **gekennzeichnet**, daß bei einem Beschleunigungsvorgang ein Signal entsteht, das einer höheren Fahrgeschwindigkeit entspricht und bei einem Verzögerungsvorgang ein Signal, das einer niedrigeren Fahrgeschwindigkeit entspricht.

4. Steuergerät nach einem der Ansprüche 2 und 3, dadurch **gekennzeichnet**, daß in dem Steuergerät (1) parallel zu einem Glied (3) für die Erfassung der Fahrgeschwindigkeit ein Differenzierglied (5) angeordnet ist, die beide ihre Signale an die Einrichtung (4) zur Signalverarbeitung liefern.

5. Steuergerät nach Anspruch 4, dadurch **gekennzeichnet**, daß die Einrichtung (4) zur Signalverarbeitung ein Kennfeld enthält.

6. Steuergerät nach Anspruch 5, dadurch **gekennzeichnet**, daß das Kennfeld wenigstens eine Kennlinientabelle und wenigstens eine Beschleunigungstabelle enthält.

7. Steuergerät nach Anspruch 4, dadurch **gekennzeichnet**, daß die Einrichtung (4) zur Signalverarbeitung die Signale des Differenziergliedes (5) mathematisch oder analog verarbeitet.

8. Steuergerät nach einem der Anspruch 1 bis 7, dadurch **gekennzeichnet**, daß das Stellglied (6) eine Magnetspule eines elektromagnetisch betätigbaren Proportionalventils ist und daß der dem Proportionalventil zugeführte Speisestrom von einem Leistungstransistor (8) in Abhängigkeit von der Fahrgeschwindigkeit des Kraftfahrzeugs und von der zeitlichen Änderung der Fahrgeschwindigkeit geregelt wird.

## Claims

1. Controller for a power-assisted steering system for motor vehicles, having an actuator (6) for varying the steering characteristic which is triggerable in dependence upon the driving speed of the motor vehicle, characterized in that, in addition to the driving speed, the time rate of change of the driving speed is taken into consideration for triggering of the actuator (6).

2. Controller according to claim 1, characterized in that in a signal processing device (4) the driving speed and the time rate of change of the driving speed are evaluated, on which basis a signal for triggering the actuator (6) is produced.

3. Controller according to claim 2, characterized in that an acceleration operation gives rise to a signal corresponding to a higher driving speed and a deceleration operation gives rise to a signal corresponding to a lower driving speed.

4. Controller according to one of claims 2 and 3, characterized in that in the controller (1) a derivative-action element (5) is disposed parallel to an element (3) for acquiring the driving speed, both of which elements supply their signals to the signal processing device (4).

5. Controller according to claim 4, characterized in that the signal processing device (4) contains a characteristics map.

6. Controller according to claim 5, characterized in that the characteristics map comprises at least one characteristic curve table and at least one acceleration table.

7. Controller according to claim 4, characterized in that the signal processing device (4) effects mathematical or analogue processing of the signals of the derivative-action element (5).

8. Controller according to one of claims 1 to 7, characterized in that the actuator (6) is a magnet coil of an electromagnetically operable proportional valve and that the supply current supplied to the proportional valve is regulated by the power transistor (8) in dependence upon the driving speed of the motor vehicle and upon the time rate of change of the driving speed.

## Revendications

1. Dispositif de commande d'une direction assistée pour véhicules automobiles, comportant un organe de réglage (6) pouvant être commandé en fonction de la vitesse de marche du véhicule pour modifier les caractéristiques de marche, **caractérisé** en ce que, en plus de la vitesse de marche, la variation dans le temps de la vitesse de marche est prise en compte lors de la commande de l'organe de réglage (6).

2. Dispositif de commande selon la revendication 1, **caractérisé** en ce que, dans une installation (4) pour le traitement des signaux, la vitesse de marche et la variation dans le temps de la vitesse de marche sont évaluées, ce dont résulte un signal pour la commande de l'organe de réglage (6).

3. Dispositif de commande selon la revendication 2, **caractérisé** en ce que, lors d'un processus d'accélération, se produit un signal qui correspond à une vitesse de marche supérieure et, lors d'un processus de ralentissement, se produit un signal qui correspond à une vitesse de marche inférieure.

4. Dispositif de commande selon l'une des revendications 2 et 3, **caractérisé** en ce que, dans le dispositif de commande (1), un organe de différenciation (5) est agencé parallèlement à un organe (3) pour la détection de la vitesse de marche, les deux organes fournissant leurs signaux à l'installation (4) pour le traitement des signaux.

5. Dispositif de commande selon la revendication 4, **caractérisé** en ce que l'installation (4) pour le traitement des signaux comporte un champ caractéristique.

6. Dispositif de commande selon la revendication 5, **caractérisé** en ce que le champ caractéristique comporte au moins un tableau de lignes caractéristiques et au moins un tableau des accélérations.

7. Dispositif de commande selon la revendication 4, **caractérisé** en ce que l'installation (4) pour le traitement des signaux traite les signaux de l'organe de différenciation (5) de façon mathématique ou analogique.

8. Dispositif de commande selon l'une des revendications 1 à 7, **caractérisé** en ce que l'organe de réglage (6) est une bobine magnétique d'une soupape proportionnelle à activation électromagnétique et en ce que le courant d'alimentation amené à la soupape proportionnelle est réglé par un transistor de puissance (8) en fonction de la vitesse de marche du véhicule automobile et de la variation dans le temps de la vitesse de marche.
